# EUROPEAN PATENT APPLICATION

(11) **EP 1 976 305 A2**
(43) Date of publication of application: **01.10.2008**
(21) Application number: 08004072.8
(22) Date of filing: 05.03.2008
(51) Int. Cl.: H04N 9/79

(54) **Program recording apparatus and program recording method**

(30) Priority: 30.03.2007 JP 2007093051
(71) Applicant: Kabushiki Kaisha Toshiba, Minato-ku, Tokyo 105-8001 (JP)
(72) Inventor: Okada, Koji, Intell. Prop. Div., Tokyo 105-8001 (JP); Fukushima, Michihiro, Toshiba Corporation, IP Div., Tokyo 105-8001 (JP)
(74) Representative: HOFFMANN EITLE

(57) **Abstract**

According to one embodiment, a program recording apparatus (100) includes: a recording means (113) for recording program data transmitted in terrestrial digital broadcasting; a judging means (112) for performing simultaneous judgment of whether or not broadcasting for mobile receivers targeting the mobile receivers is simultaneous broadcasting with broadcasting for fixed receivers targeting the fixed receivers; and a program recording control means (112) for making the recording means (113) selectively record program data of the broadcasting for fixed receivers and program data of the broadcasting for mobile receivers in correspondence with a judgment result of the judging means.

## Description

### BACKGROUND

### 1. Field

One embodiment of the invention relates to a program recording apparatus recording program data transmitted in terrestrial digital broadcasting and a program recording method thereof.

### 2. Description of the Related Art

In recent years, as satellite digital broadcasting such as terrestrial digital broadcasting, BS (Broadcasting Satellite) broadcasting, 110-degree CS (Communication Satellite) broadcasting come into practical use, program recording apparatuses recording program data transmitted in digital broadcasting become widespread.

As for the terrestrial digital broadcasting, one channel is divided into thirteen segments (segs) in Japan. Thereby, a band can be used by a unit of segment. In multi-channel broadcasting, it is possible to perform 3-channel broadcasting by broadcasting (hereinafter, referred to as "1-segment broadcasting" and also referred to as 1-seg) for mobile receivers by using one segment (channel), and 1-channel broadcasting for fixed receivers by using remaining twelve segments of a high vision or a standard image quality (SDTV).

Conventionally, for a program recording apparatus recording program data transmitted in digital broadcasting, for example, a following program receiving apparatus is disclosed in Japanese Patent Application Publication (KOKAI) No. 2005-204064 (Patent Document 1). This program recording apparatus includes a plurality of data receiving means for receiving data transmitted in digital broadcasting per encoding format to demodulate the received data, and the data received and demodulated respectively by the plural data receiving means are concurrently stored in a memory, so that program recording is performed.

### SUMMARY OF THE INVENTION

Conventionally, broadcasting (1-segment broadcasting in Japan) for mobile receivers targeting the mobile receivers is simultaneous broadcasting with broadcasting (12-segment broadcasting within Japan) for stationary type fixed receivers targeting the fixed receivers, so that contents of the broadcasting may sometimes be the same as contents of the broadcasting for the fixed receivers.

However, since broadcasting for mobile receivers is not required to be simultaneous broadcasting with broadcasting for fixed receivers, it is also planned to broadcast an independent program whose contents are different from the contents of the broadcasting for fixed receivers. Then, depending on the program, the broadcasting for mobile receivers is not the simultaneous broadcasting with the broadcasting for fixed receivers, and it is not possible to record the same program as the program of the broadcasting for fixed receivers by using the broadcasting for mobile receivers.

The present invention is made to solve the above problem, and its object is to provide a program recording apparatus capable of surely recording, for mobile receivers, a program of broadcasting for fixed receivers, and a program recording method thereof.

In order to solve the above problem, the invention provides a program recording apparatus including: a recording means for recording program data transmitted in terrestrial digital broadcasting; a judging means for performing simultaneous judgment of whether or not broadcasting for mobile receivers targeting the mobile receivers is simultaneous broadcasting with broadcasting for fixed receivers targeting the fixed receivers; and a program recording control means for making the recording means selectively record program data of the broadcasting for fixed receivers and program data of the broadcasting for mobile receivers in correspondence with a judgment result of the judging means.

The invention also provides a program recording method in a program recording apparatus including a recording means for recording program data transmitted in terrestrial digital broadcasting, the program recording method including: performing simultaneous judgment of whether or not broadcasting for mobile receivers targeting the mobile receivers is simultaneous broadcasting with broadcasting for fixed receivers targeting the fixed receivers; and making the recording means selectively record program data of the broadcasting for fixed receivers and program data of the broadcasting for mobile receivers in accordance with a result of the judgment.

As described in detail above, according to the invention, a program recording apparatus capable of surely recording, for mobile receivers, a program of broadcasting for fixed receivers, and a program recording method thereof are provided.

### BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.
FIG. 1 is a block diagram showing a constitution of a program recording apparatus according to an embodiment of the invention;
FIG. 2 is a block diagram showing a main constitution related to program recording for mobile, among components of the program recording apparatus;
FIG. 3 is a flowchart showing an operational procedure of program recording for mobile in accordance with a program recording program; and
FIG. 4 is a diagram showing an example of an electronic program guide displayed on an LCD panel 109 by using EPG data.

### DETAILED DESCRIPTION

Various embodiments according to the invention will be described hereinafter with reference to the accompanying drawings.

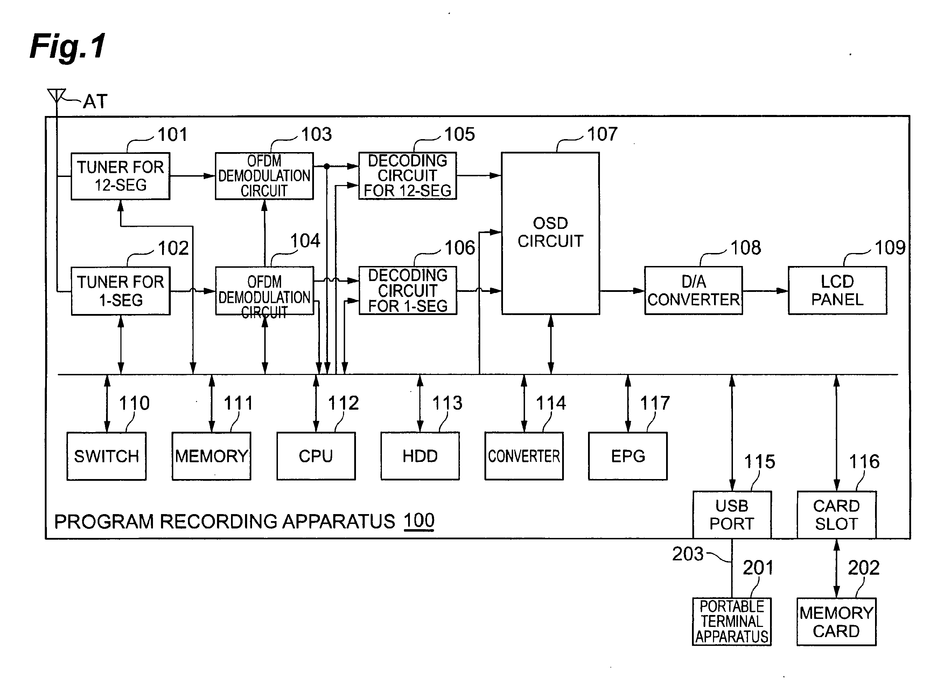

FIG. 1 is a block diagram showing a constitution of a program recording apparatus 100 according to an embodiment of the invention. The program recording apparatus 100 according to the embodiment is a stationary-type fixed receiver including a video display means for displaying a video of a program of terrestrial digital broadcasting and a program recording control means for controlling recording of the program.
It should be noted that the program recording apparatus 100 according to the embodiment receives a program of 1-segment broadcasting being broadcasting for mobile receivers' and receives a program of 12-segment broadcasting being broadcasting for fixed receivers.

As shown in FIG. 1, the program recording apparatus 100 includes first and second digital tuners 101, 102, first and second OFDM (Orthogonal Frequency Division Multiplexing) demodulation circuits 103, 104, first and second decoding circuits 105, 106, and an OSD circuit 107.

The program recording apparatus 100 also includes a D/A converter 108, an LCD (Liquid Crystal Display) 109, a switch (SW) 110, and a memory 111.

The program recording apparatus 110 further includes a CPU 112, an HDD 113, a converter 114, a USB (Universal Serial Bus) port 115, a card slot 116, and an EPG decoder 117.

The first and second digital tuners 101, 102 are supplied with broadcast waves received by an antenna AT for terrestrial digital broadcasting. Then, the digital tuners 101, 102 respectively perform receiving processings in which signal components of predetermined frequencies corresponding to designated channels are selected and received from the broadcast wave supplied from the antenna AT, and the digital turners 101, 102 output the received signal components to the first and second demodulation circuit 103, 104.

Here, the first digital tuner 101 is a receiving means for receiving a broadcast wave of 12-segment broadcasting, while the second tuner 102 is a receiving means for receiving a broadcast wave of 1-segment broadcasting. The 12-segment broadcasting is terrestrial digital broadcasting using twelve segments among a plurality of segments (thirteen segments) made by dividing one channel, while the 1-segment broadcasting is terrestrial digital broadcasting using one segment.

The first and second OFDM demodulation circuits 103, 104 respectively apply predetermined demodulation processings on the signal components extracted by the digital tuners 101, 102, and further perform processings such as error correction, to generate data (in detail, transport streams) respectively. The generated data (transport streams) are inputted to the first and second decoding circuits 105, 106 respectively.

The first and second decoding circuits 105, 106 respectively apply decoding processings on the inputted transport streams to reproduce digital video signals and digital sound signals. Here, the first decoding circuit 105 is for the 12-segment broadcasting, while the second decoding circuit 106 is for the 1-segment broadcasting.

The OSD circuit 107 overlays an OSD (On Screen Display) signal on the inputted digital video signal and outputs the overlaid signal to the D/A converter 108. The OSD signal is generated by the CPU 112.

The D/A converter 108 converts the inputted digital video signal to an analog video signal and outputs it. The LDC panel 109 is a video display means for displaying a video of a program being viewed, by using the analog video signal.

The switch 110 includes various operation switches, while the memory 111 includes a RAM, a ROM or the like. To the ROM is written a control program or a program to be executed by the CPU 112. The RAM can provide a work area necessary for execution of the program by the CPU 112.

The CPU 112 controls the above-described respective modules in accordance with the control program stored in the memory 111 and manages video display, sound output or the like. The CPU 112 has a function as a program recording control means for controlling later-described program recording for mobile by operating in accordance with a later-described program recording program. When performing the program recording for mobile, the CPU 112 uses data demodulated by the first and second OFDM demodulation circuits 103, 104 as program data.

The HDD (Hard Disk Drive) 113 has a function as a recording means for recording the data demodulated by the first and second OFDM demodulation circuits 103, 104 as program data of the terrestrial digital broadcasting.

The converter 114 is a data converting means for performing transcoding on the program data of the 12-segment broadcasting. The transcoding in the embodiment means to convert the program data of the 12-segment broadcasting to program data of a later-described portable terminal apparatus 201. For example, the transcoding means conversion of a compression ratio, conversion of a resolution, data conversion to adjust with a screen size for displaying, or the like.

The USB port 115 can connect with a connector of a USB cable 203. The portable terminal apparatus 201 is connected to the USB port 115 via the USB cable 203. The portable terminal apparatus 201 is a portable receiver, and is, for example, a portable telephone capable of viewing a program of terrestrial digital broadcasting, PDA, a portable music player or the like.

A memory card 202 such as an SD memory card (Secure Digital memory card) is inserted into the card slot 116, and the card slot 116 reads/writes data from/to the inserted memory card 202. Program data and the like for the portable terminal apparatus 201 are recorded in the memory card 202.

The EPG decoder 117 separates and extracts, from the data demodulated by the first and second OFDM demodulation circuits 103, 104, later-described EPG data overlaid on the demodulated data.

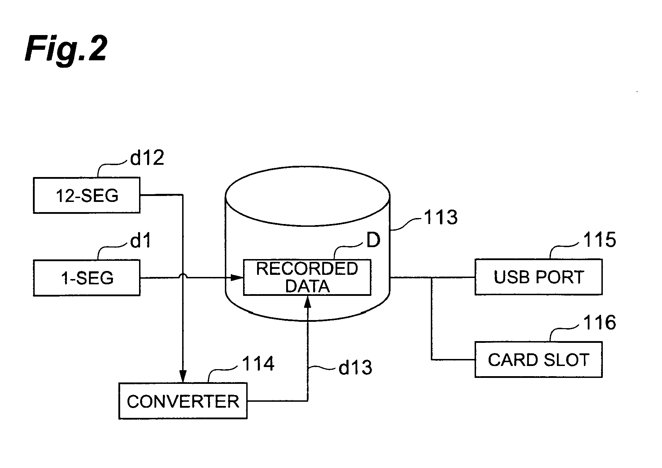

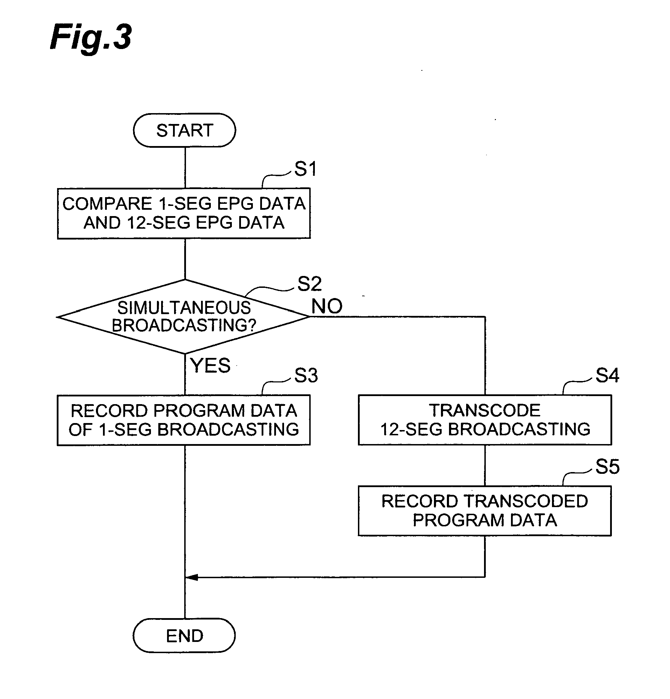

Next, program recording for mobile in the program recording apparatus 100 having the above constitution will be described with reference to FIG. 2 and FIG. 3. FIG. 2 is a block diagram showing a main constitution related to the program recording for mobile among components of the program recording apparatus 100, while FIG. 3 is a flowchart showing an operational procedure of the program recording for mobile in accordance with the program recording program by the CPU 112. The CPU 112 performs the program recording for mobile by performing operations along the flowchart shown in FIG. 3.

Here, the program recording for mobile in the program recording apparatus 100 means to switch data used for recording based on whether or not the 1-segment broadcasting is simultaneous broadcasting with the 12-segment broadcasting and to perform recording for the portable terminal apparatus 201.

In the program recording for mobile, program data d12 of the 12-segment broadcasting or program data d1 of the 1-segment broadcasting are used. When the program data d12 are used, the converter 114 operates by control of the CPU 112 and program data d13 having been transcoded by the converter 114 are recorded in the HDD 113 as recorded data D for the portable terminal apparatus 2.01.

The CPU 112 performs the program recording for mobile along the flowchart shown in FIG. 3 when instructed to perform recording of a program of the terrestrial broadcasting by a predetermined operation using the switch provided in the switch 110 or an unshown remote controller.

When the CPU 112 starts the program recording for mobile, the CPU 112 obtains EPG (Electronic Program Guide) data of the 1-segment broadcasting and EPG data of the 12-segment broadcasting from the EPG decoder 117, and compares data of designated programs in the respective data (S1).

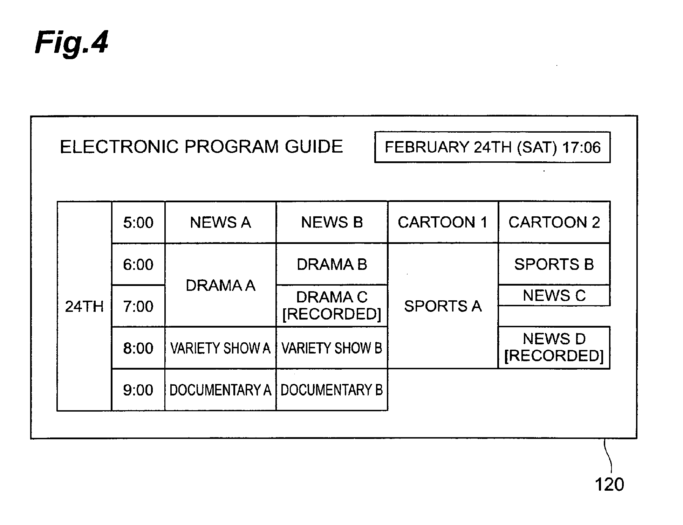

Here, the EPG data are electronic program information. By using the EPG data, an electronic program table 120, for example, shown in FIG. 4 is displayed on the LCD 109. The EPG data are overlaid on the program data in accordance with a specific format.

The EPG data include, for example, a program name, a program category, a program start time, a program end time, data of program contents, and so on. Since whether or not the 1-segment broadcasting is simultaneous broadcasting with the 12-segment broadcasting can be judged by whether or not programs of the both are the same, it suffices to compare data of at least program names in S2 described later.

Next, the CPU 112 compares the EPG data of the 1-segment broadcasting and the EPG data of the 12-segment broadcasting (S2). In this case, the CPU 112 performs an operation as a judging means for performing simultaneous judgment of whether or not the 1-segment broadcasting is simultaneous broadcasting with the 12-segment broadcasting. For example, as described above, it suffices that the CPU 112 performs the simultaneous judgment based on a comparison result of at least the program name data, but the CPU 112 can judge based on at least one of the program names, the program categories and the broadcasting times. When three items of the program names, the program categories, and the broadcasting times coincide, a probability of being simultaneous broadcasting is high, so that usage of three items, i.e., the program names, the program categories, and the broadcasting times enables precise simultaneous judgment.

Here, if the CPU 112 judges that the 1-segment broadcasting is simultaneous broadcasting with the 12-segment broadcasting, the CPU 112 proceeds to S3. If the CPU 112 judges that the 1-segment broadcasting is not simultaneous broadcasting with the 12-segment broadcasting, the CPU 112 proceeds to S4.

When the CPU 112 proceeds to S3, the CPU 112 makes the HDD 113 record the program data d1 of the 1-segment broadcasting as recorded data D for the portable terminal device 201. Further, when proceeding to S4, the CPU 112 instructs the converter 114 to transcode the program data d12 of the 12-segment broadcasting. The CPU 112 subsequently proceeds to S5 and makes the HDD 113 record the transcoded program data d13. In this case, the program data d13 recorded in the HDD 113 are the recorded data D. The CPU 112, after performing S3 or S5, ends the program recording for mobile.

By the above procedure, when the 1-segment broadcasting is simultaneous broadcasting with the 12-segment broadcasting, the program data d1 of the 1-segment broadcasting are used to generate the recorded data D, and when the 1-segment broadcasting is not simultaneous broadcasting with the 12-segment broadcasting, the program data d12 of the 12-segment broadcasting are used to generate the recorded data D.

Since the 1-segment broadcasting is not required to be simultaneous broadcasting with the 12-segment broadcasting, it may be assumed that an independent program whose contents are different from contents of the 12-segment broadcasting is broadcasted. Then, it becomes unable to record the same program as the program of the 12-segment broadcasting by using the 1-segment broadcasting.

However, the program recording apparatus 100 switches the program data to be used for the recording in correspondence with whether or not the 1-segment broadcasting is simultaneous broadcasting with the 12-segment broadcasting. When the 1-segment broadcasting is not simultaneous broadcasting with the 12-segment broadcasting, the program data d12 of the 12-segment broadcasting are used for recording. Therefore, even if an independent program different from the program of the 12-segment broadcasting is broadcasted in the 1-segment broadcasting (if the 1-segment broadcasting is independent broadcasting independent of the 12-segment broadcasting), the program of the 12-segment broadcasting can be surely recorded for the portable terminal apparatus 201.

Further, the program recording apparatus 100 judges whether or not the 1-segment broadcasting is simultaneous broadcasting with the 12-segment broadcasting, and based on the judgment result, switches the program data to be used for the recording. Therefore, it is not necessary for a user to mind whether or not the 1-segment broadcasting is simultaneous broadcasting with the 12-segment broadcasting. Accordingly, convenience for the user is ensured in the program recording apparatus 100.

Further, when the 1-segment broadcasting is simultaneous broadcasting with the 12-segment broadcasting, the program recording apparatus 100 uses the program data d1 of the 1-segment broadcasting. In this case, since transcoding by the converter 114 is not necessary, the operation of the program recording apparatus 100 is simplified. Therefore, the program recording apparatus 100 not only can surely perform the recording for the portable terminal apparatus 201 but also simplifies the operation by performing the transcoding only when necessary.

The EPG data is overlaid on the program data, and usage of the EPG data enables judgment of whether or not the 1-segment broadcasting is simultaneous broadcasting with the 12-segment broadcasting.

Further, when performing the recording by using the program data d12 of the 12-segment broadcasting, the program recording apparatus 100 performs the transcoding by the converter 14. Thus, even when the program data d12 of the 12-segment broadcasting are used, the recorded data D to be acquired are suitable for program viewing by means of the portable terminal apparatus 201. Therefore, when the program is viewed in the portable terminal apparatus 201, it is not necessary to convert the recorded data D.

The recorded data D generated by the above-described program recording for mobile can be transferred to the portable terminal apparatus 201 via the USB port 115 and the USB cable. The recorded data D can also be recorded to the memory card 202 inserted into the card slot 116 and imported to the portable terminal apparatus 201 by using the memory card 202. Thereby, the recorded program of the terrestrial digital broadcasting can be viewed by means of the portable terminal apparatus 201.

Further, though not shown, when the 1-segment broadcasting is simultaneous broadcasting with the 12-segment broadcasting, the program data d12 of the 12-segment broadcasting can be recorded to the HDD 113 in addition to the program data d1 of the 1-segment broadcasting. Then, the program data d12 recorded to the HDD 113 can be used as data for viewing (mainly domestic viewing) using the LCD 109. In this case, subsequent to S3 described above, the CPU 112 makes the HDD 113 record the program data d12.

The above embodiment is described with an example of a television with a recording function, the television including a video display means for displaying a video of a terrestrial broadcasting program and a program recording control means for performing recording of the program. However, the invention can also be applied to a program recording apparatus without a video display means, such as a DVD recorder, an HDD recorder or the like.

The program recording apparatus 100 in the above embodiment includes a receiving means for receiving a program of 1-segment broadcasting and a receiving means for receiving a program of 12-segment broadcasting. It suffices that the receiving means can receive broadcasting for mobile receivers or broadcasting for fixed receivers, and the program recording apparatus 100 can include a receiving means for receiving broadcasting of a system different from the 1-segment broadcasting and the 12-segment broadcasting. For example, the receiving means can be one receiving broadcasting for mobile receivers and broadcasting for fixed receivers, the broadcasting performed without dividing a frequency band of one channel into segments.

In this case, it suffices that the CPU 112 makes the HDD 113 selectively record program data of the broadcasting for fixed receivers and program data of the broadcasting for mobile receivers.

The above descriptions are descriptions about the embodiments of the invention, and are not intended to limit the apparatus or method of the invention, but various modification examples can be easily made. Further, an apparatus or a method constituted by combining components, functions, characteristics, or process steps in respective embodiments are also included in the invention.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A program recording apparatus (100) comprising:
a recording means (113) for recording program data transmitted in terrestrial digital broadcasting;
a judging means (112) for performing simultaneous judgment of whether or not broadcasting for mobile receivers targeting the mobile receivers is simultaneous broadcasting with broadcasting for fixed receivers targeting the fixed receivers; and
a program recording control means (112) for making said recording means (113) selectively record program data of the broadcasting for fixed receivers and program data of the broadcasting for mobile receivers in correspondence with a judgment result of said judging means.

2. The program recording apparatus (100) according to claim 1, wherein
said program recording control means (112) makes said program recording means (113) record the program data of the broadcasting for fixed receivers when it is judged that the broadcasting for mobile receivers is not simultaneous broadcasting with the broadcasting for fixed receivers by said judging means (112).

3. The program recording apparatus (100) according to claim 1 or claim 2, wherein
said program recording control means (112) makes said recording means (113) record the program data of the broadcasting for mobile receivers when it is judged that the broadcasting for mobile receivers is simultaneous broadcasting with the broadcasting for fixed receivers by said judging means (112).

4. The program recording apparatus (100) according to any one of claim 1 to claim 3, wherein
said judging means (112) performs the simultaneous judgment based on a comparison result of electronic program guide data of the broadcasting for mobile receivers and electronic program guide data of the broadcasting for fixed receivers.

5. The program recording apparatus (100) according to any one of claim 1 to claim 4, further comprising
a video display means (109) for displaying a video of the program of the broadcasting for fixed receivers.

6. The program recording apparatus (100) according to any one of claim 1 to claim 5, further comprising
a data converting means (114) for converting the program data of the broadcasting for fixed receivers to program data of the broadcasting for mobile receivers, wherein
said program recording control means (112) makes said recording means (113) record the program data converted by said data converting means.

7. The program recording apparatus (100) according to any one of claim 1 to claim 6, further comprising:
a broadcast receiving means (102) for mobile receivers for receiving a broadcast wave of the broadcasting for mobile receivers; and
a broadcast receiving means (101) for fixed receivers for receiving a broadcast wave of the broadcasting for fixed receivers, wherein
said program recording control means (112) uses data obtained from the broadcast wave received by said broadcast receiving means for fixed receivers as the program data of the broadcasting for fixed receivers.

8. The program receiving apparatus (100) according to any one of claim 1 to claim 7, wherein:
said judging means (112) performs, as the simultaneous judgment, judgment of whether or not 1-segment broadcasting using one of a plurality of segments made by dividing one channel is simultaneous broadcasting of 12-segment broadcasting using twelve segments of the plurality of segments; and
said program recording control means (112) makes program data of the 12-segment broadcasting and program data of the 1-segment broadcasting selectively recorded in correspondence with the judgment result of said judging means.

9. A program recording method in a program recording apparatus (100) including a recording means (113) for recording program data transmitted in terrestrial digital broadcasting, the program recording method comprising:
performing simultaneous judgment of whether or not broadcasting for mobile receivers targeting the mobile receivers is simultaneous broadcasting with broadcasting for fixed receivers targeting the fixed receivers; and
making the recording means selectively record program data of the broadcasting for fixed receivers and program data of the broadcasting for mobile receivers in accordance with a result of the judgment.
